## Europäisches Patentamt

## European Patent Office

## Office européen des brevets

(19)

(11) Publication number: **0 112 682**

**B1**

(12) # EUROPEAN PATENT SPECIFICATION

(45) Date of publication of patent specification: **12.11.86**

(51) Int. Cl.⁴: **B 60 J 3/02**

(21) Application number: **83307570.8**

(22) Date of filing: **13.12.83**

(54) **Visor actuating mechanism.**

(30) Priority: **27.12.82 US 453530**

(43) Date of publication of application:
**04.07.84 Bulletin 84/27**

(45) Publication of the grant of the patent:
**12.11.86 Bulletin 86/46**

(84) Designated Contracting States:
**DE FR GB IT**

(56) References cited:
**EP-A-0 100 632
DE-B-1 014 446
GB-A- 684 364**

(73) Proprietor: **PRINCE CORPORATION
Windcrest Drive
Holland Michigan 49423 (US)**

(72) Inventor: **Marcus, Konrad Hugh
1162 Waukazoo Drive
Holland Michigan 49423 (US)**
Inventor: **Fleming, Dennis Joseph
617 State Street
Holland Michigan 49423 (US)**

(74) Representative: **Robinson, Anthony John
Metcalf et al
Kilburn & Strode 30 John Street
London, WC1N 2DD (GB)**

Courier Press, Leamington Spa, England.

# Description

The present invention relates to vehicle visors and particularly to a mechanism for actuating visors from a stored position, preferably automatically.

In conventional visors, which pivot on a rod, such visors are manually moved by the user by grasping the visor body to rotate it from a raised stored position to a lowered use position. EP—A—0100632 (published on 15.2.84) describes a visor which swings down to a use position from a concealed position stored within a vehicle headliner and employs a parallel arm construction to provide such movement. In this system, the visor is manually moved by the user by grasping a small handle positioned on the lower edge of the visor.

GB—A—684364 describes a vehicle visor actuating mechanism according to the precharacterising portion of claim 1 which is suitable for use with a visor assembly comprising a visor body and mounting means for moveably mounting the visor body to a vehicle for movement between stored and use positions. The actuating mechanism according to the present invention is characterised by bias means coupled to the mounting means for urging the visor body toward the use position; and holding means for releasably holding the visor body in the stored position against the force provided by the bias means.

Preferably the mounting means comprises first and second elements moveable with respect to one another. The moving means may conveniently comprise a pair of substantially parallel arms and means for pivotally coupling the arms between the vehicle and the visor body.

The bias means may extend between one of the elements, such as one of the arms, and a stationary member on the vehicle, such as a sheet metal panel connected to the headliner of the vehicle.

Preferably the bias means comprises a spring and a first coupling means for selectively coupling an end of the spring to the first element. The bias means may conveniently be a coil spring. A second coupling means for coupling an opposite end of the bias means to the second element may be provided. In one preferred construction one end of the spring is coupled to the stationary member, such as the sheet metal panel connected to the headliner of the vehicle, via a notch in a collar, the spring being held in axial alignment over the collar by a spring clip and the other end of the spring is coupled via a pin to one of the arms which comprises the moving means. The second coupling means may selectively disengage the bias means from the second element upon movement of the visor body a pre-determined distance.

The holding means may comprise a latching assembly coupled to one of the mounting means to prevent movement when the visor is in a stored position. In one construction the mounting means comprises a pin and the holding means comprises an arm having a notch formed therein for captively holding the pin and moving means for moving the mounting means. Conveniently the arm is pivotally mounted to a stationary member of the visor assembly and the moving means comprises an electrically actuated solenoid for holding the mounting means in a first pin holding position and pivoting the mounting means to release the pin when the solenoid is actuated. The preferred construction will thus provide an electric push-button switch to release the holding means to permit the bias means to urge the visor downwardly from the stored position. At least one pivot and an element pivoted about the pivot is preferably provided and the bias means preferably comprises a coil spring positioned coaxially on the pivot and anchored thereto, the spring having an end selectively coupled to the element.

The invention may be carried into practice in various ways but one visor incorporating a visor actuating control mechanism will now be described with reference to the accompanying drawings in which:

Figure 1 is a fragmentary, perspective view of a visor installed in a vehicle;

Figure 2 is an enlarged, exploded, fragmentary view of the visor actuating mechanism on the visor of Figure 1 in a visor lowered position and viewed from a direction above and opposite that shown in Figure 1; and

Figure 3 is an enlarged, fragmentary, perspective view of the visor actuating mechanism of Figure 2 in a visor latched position.

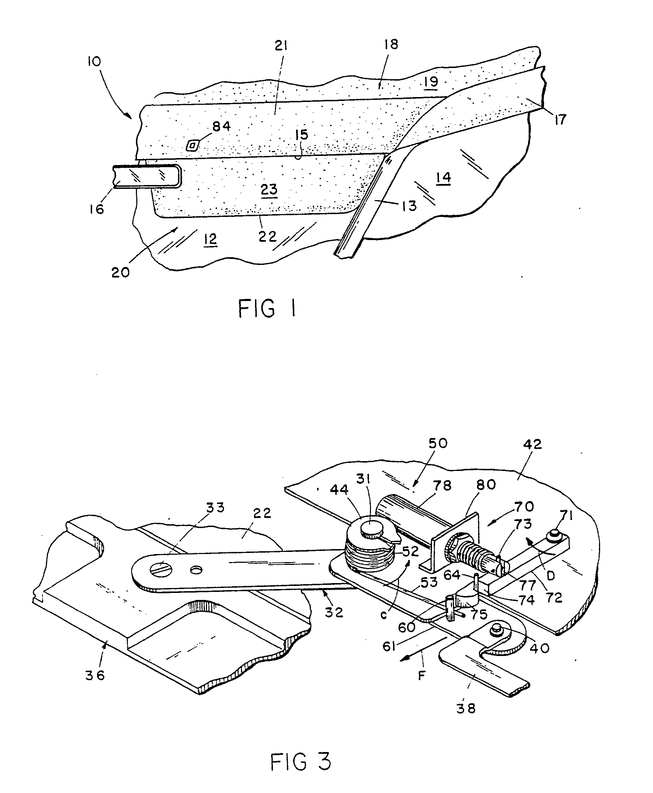

Referring initially to Figure 1, there is shown a right front interior of a vehicle 10 which includes a windshield 12, a right side, side window 14 and a rearview mirror 16. An angled support post 13 extends between the side window and windshield. Extending above the windshield is the ceiling or headliner area 18 of the vehicle which typically is upholstered with a fabric 19 conforming to the vehicle's general interior decor. The headliner frequently will include a snap-in upholstered panel secured in a known manner to the sheet metal roof of the vehicle by means of a known mounting structure adapted to receive snap-fasteners, screws or the like. Extending along the lower edge of the headliner, just above the side window 14, is an integral side window visor assembly 17, similar to that described in EP—A—0098050 (published on 11.1.84).

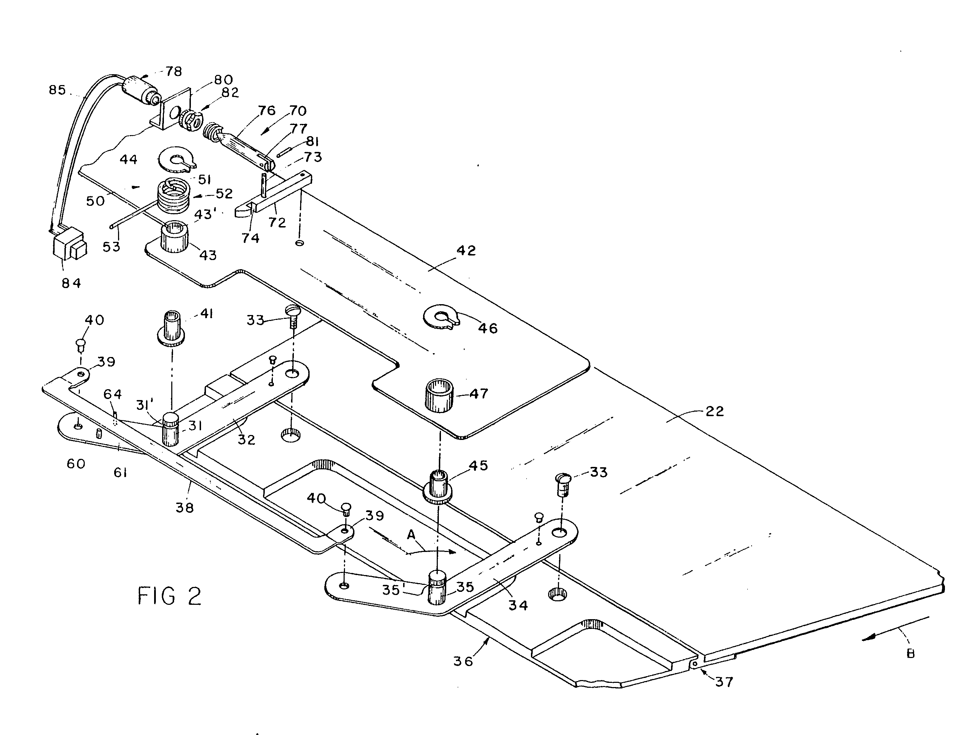

In Figure 1, a front right visor assembly 20 is shown in its lowered use position extended from an opening 15 on the lower edge and between the angled support post 13 and an upholstered cover panel 21 for the visor assembly 20. The panel 21 extends just above the windshield 12 and across the top thereof to provide a decorative cover for substantially identical left and right visor assemblies, with only the right visor assembly being illustrated. The construction and operation of the mounting components of the visor assembly 20 are described in greater detail in EP—A—0100632. As seen in Figure 3, the visor assembly 20 includes a visor body or panel 22' which is covered by upholstery material 23 (Figure 1) conforming to the vehicle's interior upholstery. The underlying visor body or panel 22 is coupled to a pair of dog leg-shaped, generally parallel pivot arms 32 and 34 by means of pivot fasteners 33 extending between one end of each of the arms 32 and 34 and a mounting bracket 36 to which the visor panel 22 is pivotally coupled by means of a pivot rod assembly 37 to permit fore and aft adjustment of the visor panel 22 when in a lowered position, as shown in Figure 1. The opposite ends of the pivot arms 32 and 34 are pivotally coupled to a cross arm 38 which is generally U-shaped having end tabs 39 slightly off-set from the body of the cross arm 38 and including apertures therein which align and are pivotally coupled to the opposite ends of the arms 32 and 34 by means of pivot fasteners 40. As described in the above identified EP—A—0100632, the cross arm 38 which is mounted to the arms 32 and 34 in an off-set manner provides stability and ease of operation for the swing-down operation of the visor panel 22 when moved from a stored position concealed within the vehicle headliner to a lowered use position. The arms 32 and 34 are pivotally secured at spaced locations of the vehicle headliner and specifically to a sheet metal panel 42 by means of pivot pins 31 and 35 extending upwardly from the elbow portion of the arms 32 and 34, as shown in Figure 2. The pins 31 and 35 extend through sleeve bushings 41 and 45, respectively, which are, in turn, fitted within collars 43 and 47 welded or force fitted within the panel 42, as seen in Figure 2. The pivot pins 31 and 35 are held in position by means of C-shaped spring clips 44 and 46 which fit within annular grooves 31' and 35' formed near the upper edge of the pivot pins 31 and 35, respectively, when the unit is assembled (Figure 3). The panel 42 can be an integral part of the sheet metal headliner of the vehicle or, a separate assembly which in turn is fastened to the sheet metal roof of the vehicle in a known manner such as by sheet metal screws or the like.

The visor assembly, as seen in Figure 2, is shown in the lowered position and moves to such position about the pivot pins 31 and 35 in a direction indicated by arrow A, to move downwardly and slightly toward the side of the adjacent angled support post 13 (Figure 1). When moved upwardly in a general direction indicated by arrow B, from the lowered use position to the stored position concealed within the vehicle headliner it rotates about the pins 31 and 35 in a direction opposite arrow A. Having described the pivoted arm construction of the visor raising and lowering mechanism, a description follows of the mechanism by which the visor can be automatically lowered from a stored position by reference to Figures 2 and 3.

The visor actuating mechanism 50 includes a coil spring 52 which has a inner diameter large enough to permit the spring to extend coaxially over collar 43, as seen in the installed position of Figure 3, with one end 51 of the spring inwardly turned along the centre thereof to fit within a notch 43' of collar 43 to anchor the spring and prevent rotation of the spring around the collar once installed. The C-spring clip 44 holds the spring in axial alignment over the collar, once installed, with the end 51 seated within the notch 43'. The opposite end or spring arm 53 of the spring 52 extends outwardly, as seen in Figure 2, and selectively engages a cam in the form of a pin 60 extending upwardly from a leg segment 61 of the arm 32. When the visor is in the lowered position, as seen in Figure 2, spring arm 53 substantially disengages the pin 60 when, however, the visor is moved to a raised position, as illustrated in Figure 3, the pin 60 engages the spring arm 53 tending to rotate the arm in a direction indicated by arrow C to compress the coil spring which, in turn, provides a spring force in a direction indicated by arrow F in Figure 3 which, unless the arms are latched, urges the interconnected parallel arms 32 and 34 to pivot around the pivot pins 31 and 35 in a direction opposite arrows A and C, namely, toward a visor lowering position. The spring 52 is formed such that end 53 extends tangentially outwardly at a point along the outer periphery of the spring to disengage the pin 60 when the arm 32 has rotated about 90° corresponding to the visor being lowered approximately half-way. Thus, the spring end 53 will stop in the position shown in Figure 2.

In order to hold the visor in a concealed stored position and latched against the bias spring 52, a latching assembly 70 is provided and includes a latching bar 72 having one end pivotally coupled to the panel 42 by means of a pivot pin 71 (Figure 2) and extending outwardly therefrom and including a pin receiving slot 74 for releasably engaging a latch pin 64 extending upwardly from the leg segment 61 of the pivot arm 32, as best seen in Figure 3. The latching bar 72 also includes an upwardly projecting pin 73 which is coupled to the end of a plunger 76 of an electrically operated solenoid 78. The solenoid 78 is mounted to the panel 42 by means of an angled mounting bracket 80 by known mounting means 82 and is spring loaded with the plunger 76 extending outwardly. The bracket 80 is, in turn, secured to the panel 42. The end of plunger 76 includes a slot 77 formed therein for receiving the pin 73 which is captively held therein by means of a transversely extending roll pin 81 extending in apertures on opposite edges of the slot 77 in the end of the plunger 76 to hold the pin 73 within the slot 77.

With the solenoid in a non-actuated position, the spring-loaded solenoid urges the latching arm into a latching position, as shown in Figure 3. The end of the latching 72, opposite the pivot pin 71, includes a curved camming surface 75 such that as the visor is manually returned to its stored position, the latch pin 64 will ride over the camming surface 73 permitting the latch arm to pivot and the pin 73 to extend into the slot 74. The solenoid 78 is electrically coupled to the vehicle's power system by means of a push-button switch 84 which, as seen in Figure 1, can be conveniently mounted to the vehicle headliner to be easily accessible by the vehicle occupant. Suitable interconnecting electrical wires 85 couple the switch 84 to the solenoid 78 as well and to the vehicle power source (not shown).

When the momentarily actuated spring-loaded push-button switch 84 is actuated and the visor is in a cocked position, as shown in Figure 3, the plunger 76 retracts within the body of the solenoid 78 pivoting the latching bar 72 in a direction indicated by arrow D in Figure 3 releasing the pin 64 permitting the spring 52 to pivot the visor assembly toward the lowered use position. The momentum of the visor will cause it to lower to a fully extended position. The spring arm 53, however, with the visor in a partially lowered position, disengages the pin 60 such that the visor can be manually adjusted up and down a significant portion of its travel without the spring 52 urging it downwardly. When lowered fully, as illustrated in Figure 1, the visor body 22 can be pivoted about the pivot 37 permitting fore and aft adjustment of the visor as well.

The spring biasing of the visor control assembly and the releasable actuation of the spring-loading mechanism can be positioned on either of the arms 32 or 34 or at other locations between the moveable visor control elements and the stationary panel 42 or the vehicle itself.

**Claims**

1. A vehicle visor actuating mechanism (50) suitable for use with a visor assembly (20) comprising a visor body (22) and mounting means (32, 34, 37, 38, 42) for moveably mounting the visor body to a vehicle for movement between stored and use positions, the actuating mechanism being characterised by bias means (52) coupled to the mounting means for urging the visor body toward the use position; and holding means (70) for releasably holding the visor body in the stored position against the force provided by the bias means.

2. A visor actuating mechanism as claimed in Claim 1 in which the mounting means comprises first (42) and second (32) elements movable with respect to one another.

3. A visor actuating mechanism as claimed in Claim 1 or 2 in which the bias means (52) extends between one of the elements (32) and a stationary member on the vehicle (42).

4. A visor actuating mechanism as claimed in Claim 1, 2 or 3 in which the bias means (52) comprises a spring and a first coupling means (43) for selectively coupling an end (51) of the spring to the first element (42).

5. A visor actuating mechanism as claimed in Claim 1, 2, 3 or 4 in which there is a second coupling means (60) for coupling an opposite end (53) of the bias means to the second element (32).

6. A visor actuating mechanism as claimed in Claim 5 in which the second coupling means (60) selectively disengages the bias means from the second element (32) upon movement of the visor body (22) a predetermined distance.

7. A visor actuating mechanism as claimed in any one of the preceding claims in which the holding means (70) comprises a latching assembly coupled to one of the mounting means to prevent movement when the visor is in a stored position.

8. A visor actuating mechanism as claimed in any one of the preceding claims in which the mounting means comprises a pin (64) and the holding means (70) comprises an arm (72) having a notch (74) formed therein for captively holding the pin and moving means for moving the mounting means.

9. A visor actuating mechanism as claimed in Claim 8 in which the arm (72) is pivotally mounted to a stationary member (42) of the visor assembly and the moving means comprises an electrically actuated solenoid (78) for holding the mounting means in a first pin holding position and pivoting the mounting means to release the pin when the solenoid is actuated.

10. A visor actuating means as claimed in any one of the preceding claims comprising at least one pivot (31) and an element (32) pivoted about the pivot and the bias means comprises a coil spring (52) positioned coaxially on the pivot and anchored thereto, the spring having an end (53) selectively coupled to the element (32).

**Patentansprüche**

1. Bewegungsmechanismus (50) einer Sonnenblende (20) enthaltend einen Blendenkörper (22) und Montageelemente (32, 34, 37, 38, 42) für die bewegliche Montage des Blendenkörpers an einem Fahrzeug für die Bewegung zwischen Raststellung und Einsatzstellung, dadurch gekennzeichnet, daß der Bewegungsmechanismus ein Spannglied (52) in Einwirkung mit den Montageelementen aufweist, um den Blendenkörper in Einsatzstellung zu bringen; sowi eine Halterung (70), um den Blendenkörper lösbar in der Raststellung zu halten entgegen der durch das Spannglied wirkenden Kraft.

2. Mechanismus nach Anspruch 1, wobei die Montageelemente ein erstes (42) und ein zweites (32) enthalten, die gegeneinander bewegbar sind.

3. Mechanismus nach Anspruch 1 oder 2, worin das Spannglied (52) sich zwischen einem der Elemente (32) und einem stationärem Teil am Fahrzeug (42) erstreckt.

4. Mechanismus nach Anspruch 1 bis 3, wobei das Spannglied (52) eine Feder und eine erste Kupplung (43) für die selektive Verbindung eines Endes (51) durch die Feder mit dem ersten Element (42) aufweist.

5. Mechanismus nach Anspruch 1 bis 4, worin eine zweite Kupplung (60) für die Verbindung eines entgegengesetzten Endes (53) des Spannglieds mit dem zweitem Element (32) vorgesehen ist.

6. Mechanismus nach Anspruch 5, worin die zweite Kupplung (60) selektiv das Spannglied von dem zweitem Element (32) freigibt bei Bewegung des Blendenkörpers (22) über eine vorbestimmte Strecke.

7. Mechanismus nach einem der vorhergehenden Ansprüche, worin die Halterung (70) eine Klinke umfaßt, welche an den Montageelemmenten angeschlossen ist, um eine Bewegung zu verhindern, wenn sich die Blende in Raststellung befindet.

8. Mechanismus nach einem der vorhergehenden Ansprüche, wobei die Montageelemente einen Stift (64) umfassen und die Halterung (70) einen Arm (72) mit einer Vertiefung (74) zur Aufnahme des Stifts sowie Mittel zur Bewegung der Montageelement aufweist.

9. Mechanismus nach Anspruch 8, woring der Arm (72) an einem feststehenden Element (42) angelenkt ist und das Bewegungsmittel eine elektrisch betätigbare Spule (78) umfaßt, um die Montageelemente in einer Stifthalte-Position zu halten, und die Montageelemente angelenkt sind, um den Stift freizugeben, wenn die Spule betätigt wird.

10. Mechanismus nach einem der vorhergehenden Ansprüche, woring zumindest eine Achse (31) und ein Element (32)—angelenkt um die Achse—vorgesehen sind und das Spannglied eine Springfeder (52) koachsial zu der Achse und daran fixiert-ist, deren ein Ende (53) selektiv mit dem Element (32) verbunden ist.

**Revendications**

1. Mécanisme d'actionnement de pare-soleil de véhicule (50), approprié pour être utilisé avec un ensemble pare-soleil (20) qui comprend un corps de pare-soleil (22) et des moyens de montage (32, 34, 37, 38, 42) destinés à monter le corps du pare-soleil de façon mobile sur un véhicule, pour lui permettre de se déplacer entre des positions escamotée et d'utilisation, le mécanisme d'actionnement étant caractérisé par des moyens de sollicitation (52) accouplés aux moyens de montage pour solliciter le corps de pare-soleil vers la position d'utilisation et des moyens de retenue (70) destinés à retenir le corps du pare-soleil dans la position escamotée de façon libérable, à l'encontre de la force développée par les moyens de sollicitation.

2. Mécanisme d'actionnement de pare-soleil selon la revenication 1, dans lequel les moyens de montage comprennent un premier élément (42) et un deuxième élément (32) mobiles l'un par rapport à l'autre.

3. Mécanisme d'actionnement de pare-soleil selon la revendication 1 ou la revendication 2, dans lequel les moyens de sollicitation (52) s'étendent entre l'un (32) des éléments et un organe fixe (42) solidaire du véhicule.

4. Mécanisme d'actionnement de pare-soleil selon l'une des revendications 1, 2 et 3, dans lequel les moyens de sollicitation (52) comprennent un ressort et des premiers moyens d'accouplement (43) destinés à accoupler sélectivement une extrémité (51) du ressort au premier élément (42).

5. Mécanisme d'actionnement de pare-soleil selon l'une des revendications 1, 2, 3 et 4, dans lequel il est prevu des deuxièmes moyens d'accouplement (60) destinés à accoupler une extrémité opposée (53) des moyens de sollicitation au deuxième élément (32).

6. Mécanisme d'actionnement de pare-soleil selon la revendication 5, dans lequel les deuxièmes moyens d'accouplement (60) dégagent sélectivement les moyens de sollicitation du deuxième élément (32) lorsque le corps (22) s'est déplacé d'une distance déterminée.

7. Mécanisme d'actionnement de pare-soleil selon l'une quelconque des revendications précédentes, dans lequel les moyens de retenue (70) comprennent un ensemble de verrouillage couplé à l'une des moyens de montage pour s'opposer au mouvement lorsque le pare-soleil se trouve dans une position escamotée.

8. Mécanisme d'actionnement de pare-soleil selon l'un quelconque des revendications précédentes, dans lequel les moyens de montage comprennent un doigt (64) et les moyens de retenue (70) comprennent un bras (72) présentant une encoche (74) qui y est formée pour retenir le doigt, et des moyens moteurs servant à mettre les moyens de montage en mouvement.

9. Mécanisme d'actionnement de pare-soleil selon la revendication 8, dans lequel le bras (72) est monté pivotant sur un organe fixe (42) de l'ensemble pare-soleil et les moyens moteurs comprennent un électro-aimant (78) excité électriquement et destiné à maintenir les moyens de montage dans une première position, de retenue du doigt, et à faire pivoter les moyens de montage de manière relâcher le doigt lorsque l'électro-aimant est excité.

10. Mécanisme d'actionnement de pare-soleil selon l'une quelconque des revendications précédentes comprenant au moins un tourillon (31) et un élément (32) qui pivote autour du tourillon, et où les moyens de sollicitation comprennent un ressort hélicoïdal (52) positionné coaxialement sur le tourillon et ancré à ce tourillon, le ressort ayant une extrémité (53) sélectivement accouplée à l'élément (32).

FIG 1

FIG 3

FIG 2

0 112 682